# EUROPÄISCHE PATENTSCHRIFT

(11) **EP 2 684 655 B1**
(45) Veröffentlichungstag und Bekanntmachung des Hinweises auf die Patenterteilung: **04.03.2015**
(21) Anmeldenummer: 13003495.2
(22) Anmeldetag: 10.07.2013
(51) Int. Cl.: B25J 21/02

(54) **Vorrichtung und Verfahren zur Verlängerung der Nutzungsdauer eines Ärmelteils eines Handschuhkastens oder Isolators**
Device and method for increasing the service life of the sleeve part of a glove box
Appareil et méthode pour prolonger la durée de vie d'un manchon pour boîte à gant

(30) Priorität: 13.07.2012 DE 102012013821
(43) Veröffentlichungstag der Anmeldung: 15.01.2014
(73) Patentinhaber: BERNER INTERNATIONAL GmbH, 25337 Elmshorn (DE)
(72) Erfinder: Hinrichs, Thomas, 25365 Klein Offenseth-Sparrieshoop (DE); Maik, Guido, 25377 Kollmar (DE); Gragert, Sven, 25355 Barmstedt (DE)
(74) Vertreter: Thomas, Götz

(56) Entgegenhaltungen:
- DE-A1- 3 005 113
- FR-A1- 2 514 685
- JP-A- 2000 343 479
- JP-A- 2010 184 303

## Beschreibung

Die Erfindung betrifft eine Vorrichtung und ein Verfahren zur Verlängerung der Nutzungsdauer eines Ärmelteils, das zwischen einer Handschuhdurchführung eines gasdichten Gehäuses eines Handschuhkastens oder Isolators und einem austauschbaren Handschuh angeordnet und gasdicht mit der Handschuhdurchführung und dem Handschuh verbunden ist. Die Erfindung betrifft weiter einen Handschuhkasten oder Isolator mit einem gasdichten Gehäuse, mindestens zwei Handschuhdurchführungen, austauschbaren Ärmelteilen für jede Handschuhdurchführung und austauschbaren Handschuhen für jeden Ärmelteil.

Handschuhkästen oder Isolatoren umfassen ein Gehäuse, das einen gegenüber der Umgebung hermetisch und gasdicht abgeschlossenen Innenraum umgibt, sowie ein oder mehrere Paare von Handschuhen, die jeweils durch eine Handschuhdurchführung (Glove Port) in den Innenraum ragen. Dort, wo der Innenraum etwas größer ist, ist zwischen jeder Handschuhdurchführung und dem zugehörigen Handschuh noch ein Ärmelteil angeordnet, das die Oberarme und Unterarme einer am Handschuhkasten oder Isolator arbeitenden Person aufnimmt und den durch die Handschuhe geschützten Händen der Person im Innenraum größere Bewegungsfreiheit verleiht. Zum Personenschutz kann innerhalb des Gehäuses ein geringer Unterdruck erzeugt werden, damit keine gefährlichen Stoffe aus dem Gehäuse austreten können. Zum Produktschutz kann die Atmosphäre im Innenraum aus speziell gefilterter Luft bestehen, zum Beispiel um bei biologischen oder medizinischen Anwendungen eine Kontamination eines im Handschuhkasten oder Isolator zu untersuchenden oder zu bearbeitende Materials zu vermeiden. Um es der Bedienungsperson zu ermöglichen, die im Innenraum durchgeführten Tätigkeiten zu betrachten, sind die Handschuhdurchführungen zumeist in einer Scheibe aus Glas oder transparentem Kunststoff angeordnet.

Handschuhkästen oder Isolatoren wurden in der Vergangenheit u.a. in der Forschung und Entwicklung sowie im kerntechnischen Bereich eingesetzt, während auf pharmazeutischem Gebiet in Deutschland bisher überwiegend Sicherheitswerkbänke Verwendung fanden. Durch eine Änderung der Apothekenbetriebsordnung müssen jedoch in Zukunft Apotheken, die selbst Medikamente herstellen, zu diesem Zweck einen Reinraum bereitstellen, der mindestens der Klasse C, jedoch in der Regel der Klasse B entspricht. Da dies bei vielen Apotheken sehr teure Umbauten erforderlich machen würde, lässt die Apothekenbetriebsordnung jedoch auch die Herstellung von Medikamenten in Isolatoren zu.

Insbesondere dort, wo bei der Herstellung von Medikamenten mit cancerogenen, mutagenen oder reproduktionstoxischen Substanzen (CMR), insbesondere Zytostatika, gearbeitet wird, müssen die Handschuhe und die Ärmelteile spezielle Anforderungen an den Personenschutz erfüllen, da vor allem bei Zytostatika bereits sehr wenige, mit der Haut einer Bedienungsperson in Kontakt tretende Moleküle cancerogene oder mutagene Wirkungen besitzen können. Da zudem die flexiblen Materialien von Handschuhen und Ärmelteilen zumindest von einigen Zytostatika und auch von anderen Chemikalien allmählich durchdrungen werden, müssen die Handschuhe und Ärmelteile regelmäßig ausgetauscht werden, um eine Permeation von Zytostatika sicher auszuschließen. Im Allgemeinen liegt die maximale Nutzungsdauer von Handschuhen und Ärmelteilen von Handschuhkästen oder Isolatoren, in denen mit Zytostatika gearbeitet wird, bei 480 Minuten, da bei einer solchen Nutzungsdauer ein Durchbruch noch sicher ausgeschlossen werden kann, wenn die Handschuhe und Ärmelteile aus einem dichten, für Zytostatika und andere Chemikalien weitgehend undurchlässigen Material, wie Nitrilkautschuk (NBR), Chloropren (CN) oder Latex, gefertigt bzw. mit einer ausreichend dicken Beschichtung aus diesen Materialien versehen werden.

Während es sich bei den Handschuhen um relativ kostengünstiges Verbrauchsmaterial handelt, verursacht ein häufiger Austausch der sehr viel teureren Ärmelteile hohe Kosten.

Das Dokument FR 2 514 615 offenbart eine Vorrichtung zur Verlängerung der Nutzungsdauer eines solchen Ärmelteils, wobei ein zweiter Handschuh über dem ersten Handschuh überzogen wird. Jedoch wird ein aufwendiges Gasumlaufsystem benutzt und das Ende der Finger des zweiten Handschuhes ist abgeschitten.

Ausgehend hiervon liegt der Erfindung die Aufgabe zugrunde, ohne Beeinträchtigung des Personenschutzes die Nutzungsdauer der Ärmelteile durch geeignete Maßnahmen zu verlängern.

Diese Aufgabe wird erfindungsgemäß durch eine flexible schlauchartige Überziehmanschette mit zwei entgegengesetzten offenen Enden gelöst, deren Länge mindestens der Länge des Ärmelteils entspricht, über das sie gezogen werden soll, so dass sie das Ärmelteil vollständig bedeckt, und die an ihren entgegengesetzte Enden mit Befestigungsmitteln versehen ist, welche nach dem Überziehen der Manschette über das Ärmelteil die Enden der Überziehmanschette dicht gegen ein proximales Ende des Ärmelteils oder einen zur Befestigung des Ärmelteils am Rand der Handschuhdurchführung dienenden Schulterring bzw. dicht gegen ein distales Ende des Ärmelteils, den Handschuh oder einen zwischen dem Handschuh und dem Ärmelteil angeordneten Handschuhring anliegend festhalten bzw. anpressen.

Der Erfindung liegt der Gedanke zugrunde, im Betrieb des Handschuhkastens oder Isolators die Ärmelteile derselben durch austauschbare Überziehmanschetten zu schützen, die sich im Innenraum über die Ärmelteile ziehen und so auf den Ärmelteilen fixieren lassen, dass sie die ganze äußere Oberfläche der Ärmelteile bedecken. Vorzugsweise sind die Überziehmanschetten so ausgebildet, dass sie am proximalen Ende jedes Ärmelteils dichtend gegen die Außenseite des Ärmelteils oder eines Schulterrings anliegen, der zur Befestigung des Ärmelteils am Rand der Handschuhdurchführung dient. Die distalen Enden der Überziehmanschetten sind vorzugsweise so ausgebildet, dass sie am distalen Ende jedes Ärmelteils dichtend gegen die Außenseite des Ärmelteils, des Handschuhs oder eines zwischen dem Ärmelteil und dem Handschuh angeordneten, zur Befestigung des Handschuhs am Ärmelteil dienenden Handschuhrings anliegen. Auf diese Weise kann das Vordringen von cancerogenen, mutagenen oder reproduktionstoxischen Substanzen aus dem Innenraum zu den Ärmelteilen verzögert und damit die Nutzungsdauer der Ärmelteile verlängert werden.

Da die Dauer von Tätigkeiten zur Herstellung von Medikamenten, wie Zytostatika, in einem Handschuhkasten oder Isolator einer Apotheke gewöhnlich erheblich kürzer ist, als die zuvor für Handschuhe und Ärmelteile angegebene maximale Nutzungsdauer bis zum Durchbruch von 480 Minuten, können vor Beginn von jeder solchen Tätigkeit neue Überziehmanschetten über die Ärmelteile des Handschuhkastens oder Isolators gezogen und nach Beendigung der Tätigkeit oder der nächsten Tätigkeit wieder abgenommen werden, wenn die maximale Nutzungsdauer der Überziehmanschetten abgelaufen ist.

Eine weitere bevorzugte Ausgestaltung der Erfindung sieht vor, dass die an den Enden der Überziehmanschette angebrachten Befestigungsmittel Gummizüge umfassen, die vorzugsweise in die Enden der Überziehmanschette eingelegt, eingearbeitet oder an den Innenseiten der Enden angebracht sind, um das proximale Ende der Überziehmanschette um den ganzen Ärmelteil herum unter Spannung dichtend gegen eine benachbarte äußere Umfangsfläche des proximalen Endes des Ärmelteils oder des Schulterrings anzupressen und um das distale Ende der Überziehmanschette ebenfalls um den ganzen Ärmelteil herum unter Spannung dichtend gegen eine benachbarte äußere Umfangsfläche des distalen Endes des Ärmelteils, des Handschuhrings oder des Handschuhs anzupressen. Die Vorteile von Gummizügen, d.h. ringförmigen Gummibändern, bestehen darin, dass sie sich einerseits zur Anbringung der Überziehmanschette relativ leicht aufweiten lassen und andererseits infolge ihrer Zugspannung für eine weitgehend gasdichte Anlage der Enden der Überziehmanschette gegen die benachbarte äußere Umfangsfläche sorgen.

Insbesondere dort, wo die Enden der Überziehmanschette gegen eine äußere Umfangsfläche eines starren Schulterrings bzw. Handschuhrings anliegen, kann diese äußere Umfangsfläche mit einem wellenförmigen Profil versehen werden, das abwechselnd umlaufende Erhebungen und Vertiefungen aufweist. Dadurch kann verhindert werden, dass sich die Enden der Überziehmanschette in Bezug zu den Umfangsflächen verschieben und daher ungewollt von den Umfangsflächen abrutschen oder abgestreift werden.

Da sich der Ärmelteil vom proximalen Ende zum distalen Ende hin in der Regel verjüngt, sieht eine vorteilhafte Ausgestaltung der Erfindung vor, dass sich auch die Überziehmanschette von ihrem proximalen Ende zu ihrem distalen Ende hin verjüngt. Durch diese Ausgestaltung wird zudem die Anbringung der Überziehmanschette auf einem im Innenraum des Handschuhkastens oder Isolators angeordneten Ärmelteil erleichtert, da sich das proximale Ende der Überziehmanschette aufgrund seiner größeren Querschnittabmessungen leichter über den Ärmelteil ziehen lässt.

Da die Befestigungsmittel an den Enden der Überziehmanschette im Vergleich zu den Befestigungsmitteln zur Befestigung der Ärmelteile an den Schulter- bzw. Handschuhringen einfacher und damit preiswerter ausgebildet werden können, ist selbst dann eine Kosteneinsprung möglich, wenn die Überziehmanschetten aus einem Material hergestellt werden, dessen maximale Nutzungsdauer bis zum Durchbruch derjenigen der Ärmelteile entspricht. Zweckmäßig werden die Überziehmanschetten jedoch aus einem Material hergestellt, dessen maximale Nutzungsdauer bis zum Durchbruch weniger als 480 Minuten beträgt, vorzugsweise weniger als 240 Minuten.

Gemäß einer bevorzugten Ausgestaltung der Erfindung bestehen die Überziehmanschetten aus einem Material, das die Anforderung der DIN EN 374 an persönliche Schutzausrüstungen der Kategorie III erfüllt und für persönliche Schutzausrüstungen dieser Kategorie zugelassen ist, die zum Umgang mit cancerogenen, mutagenen oder reproduktionstoxischen Substanzen bestimmt sind. Bevorzugt bestehen die Überziehmanschetten aus einem Vlies aus Polypropylen mit einer mikroporösen Polyethylenbeschichtung, so dass das Material einerseits sehr reißfest und andererseits für Chemikalien oder Zytostatika weitgehend undurchlässig ist, so dass die Überziehmanschette die von der DIN EN 374 geforderten Eigenschaften besitzt. Alternativ kann die Überzeihmanschette aber auch aus einem mehrschichtigen Material, wobei bevorzugt mindestens eine der Schichten aus Nitrilkautschuk (NBR), Chloropren (CN), Latex oder Vinyl besteht.

Vorzugsweise ist jede Überziehmanschette an ihrer vom Ärmelteil abgewandten Außenseite mit einer Beschichtung aus einem flüssigkeitsabweisenden und/oder flüssigkeitsdichten Material versehen, da durch eine solche Beschichtung ein Eindringen von Tröpfchen oder Aerosolen in die Überziehmanschette verhindert und damit die Nutzungsdauer der Überziehmanschette bis zum Durchbruch erheblich verlängert werden kann.

Alternativ oder zusätzlich kann die Überziehmanschette an ihrer Außenseite mit einer Beschichtung versehen sein, die eine mikrobiologische Kontamination der äußeren Oberfläche der Überziehmanschette verzögert, wie beispielsweise mit einer Beschichtung, die ein Desinfektionsmittel enthält.

Um die Gefahr eines Einreißens der Überziehmanschette im Betrieb des Handschuhkastens oder Isolators zu minimieren, besteht die Überziehmanschette zweckmäßig mindestens zum Teil aus einem reißfesten Material, das vorzugsweise auf seiner Außenseite die zuvor genannte Beschichtung trägt. Bei dem reißfesten Material kann es sich zweckmäßig um ein Material aus thermisch verschweißten Polyethylen- oder Polypropylen-Fasern handeln, wie es zum Beispiel unter dem Markenamen Tyvek® bekannt ist, oder um das zuvor genannte Polypropylenvlies.

Der Ärmelteil selbst besteht aus einem Material, dessen maximale Nutzungsdauer bis zum Durchbruch mindestens 480 Minuten beträgt.

Im Folgenden wird die Erfindung anhand eines in der Zeichnung dargestellten Ausführungsbeispiels näher erläutert. Es zeigen
Fig. 1 eine Vorderseitenansicht eines erfindungsgemäßen Isolators oder Handschuhkastens mit zwei Handschuhdurchführungen;
Fig. 2 eine Seitenansicht des Isolators oder Handschuhkastens mit zwei Handschuhen und zwei mit einer Überziehmanschette versehenen Ärmelteilen oder Ärmelstulpen zwischen den Handschuhdurchführungen und den Handschuhen;

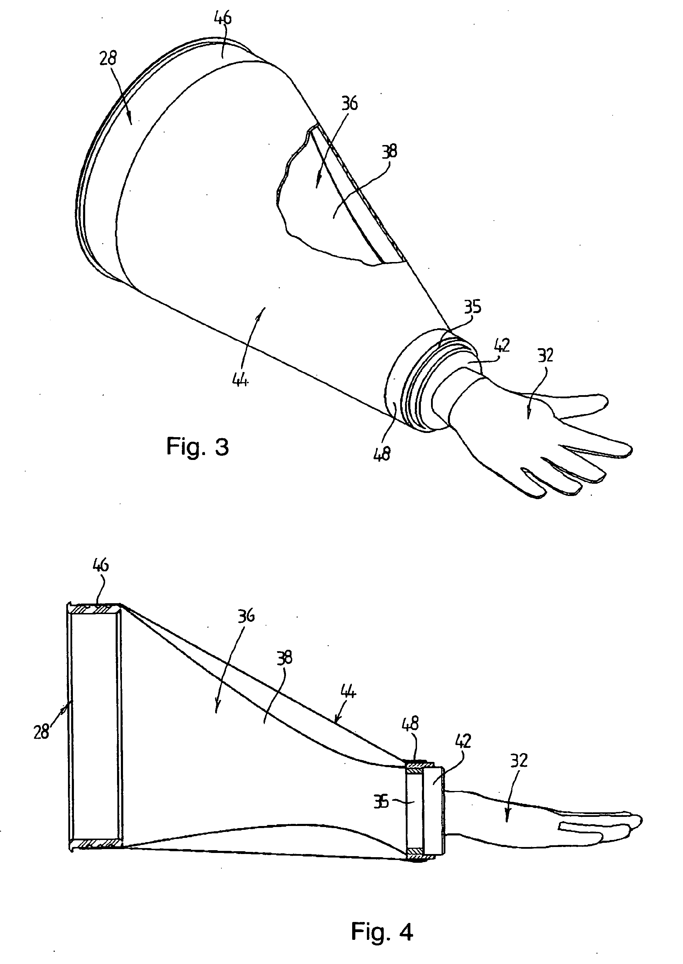

Fig. 3 eine perspektivische Ansicht von einem der mit einer Überziehmanschette versehenen Ärmelteile oder Ärmelstulpen und dem zugehörigen Handschuh;
Fig. 4 eine Längsschnittansicht von einem der mit einer Überziehmanschette versehenen Ärmelteile oder Ärmelstulpen;
Fig. 5 eine perspektivische Ansicht eines Schulterrings einer Handschuhdurchführung;
Fig. 6 eine Seitenansicht des Schulterrings aus Fig. 5;
Fig. 7 eine vergrößerte Querschnittsansicht des Schulterrings;
Fig. 8 eine vergrößerte Querschnittsansicht des Schulterrings nach dem Einsetzen in eine Öffnung der Handschuhdurchführung;
Fig. 9 eine vergrößerte Querschnittsansicht des Schulterrings nach dem Anbringen eines Ärmelteils;
Fig. 10 eine vergrößerte Querschnittsansicht des Schulterrings nach dem Anbringen einer Überziehmanschette;
Fig. 11 eine Ansicht entsprechend Fig. 10, jedoch mit einer etwas modifizierten Überziehmanschette.

Der in der Zeichnung dargestellte Handschuhkasten oder Isolator 10 dient zur Herstellung von Medikamenten und insbesondere von Zytostatika in einer Apotheke gemäß Apothekenbetriebsordnung.

Der Handschuhkasten oder Isolator 10 besteht im Wesentlichen aus einem höhenverstellbaren Unterteil oder Untergestell 12, einem Mittelteil 14 aus einem gasdicht geschlossenen Gehäuse 16 und einem Oberteil 18, das unter anderem ein Gebläse (nicht dargestellt) zur Zufuhr von Luft in einen vom Gehäuse 16 umschlossenen Innenraum 20, sowie Hepa-Filter (nicht dargestellt) zur Filterung der in den Innenraum 20 zugeführten und der aus dem Innenraum 20 abgesaugten Luft umfasst, so dass die Luftqualität im Innenraum 20 im Betrieb der Reinraumklasse A gemäß EU-GMP-Leitfaden entspricht. Durch Steuerung der Luftzufuhr in den Innenraum 20 und der Luftabsaugung aus dem Innenraum 20 wird dort ein Unterdruck aufrechterhalten, damit keine gefährlichen Stoffe aus dem Innenraum 20 in die Umgebung austreten können.

Der Mittelteil 14 umfasst weiter eine aktiv belüftete, mit HEPA-Filtern ausgestattete Materialschleuse (nicht dargestellt), durch welche die Zytostatika in den Innenraum 20 des Gehäuses 16 eingebracht bzw. aus dem Innenraum 20 entnommen werden können.

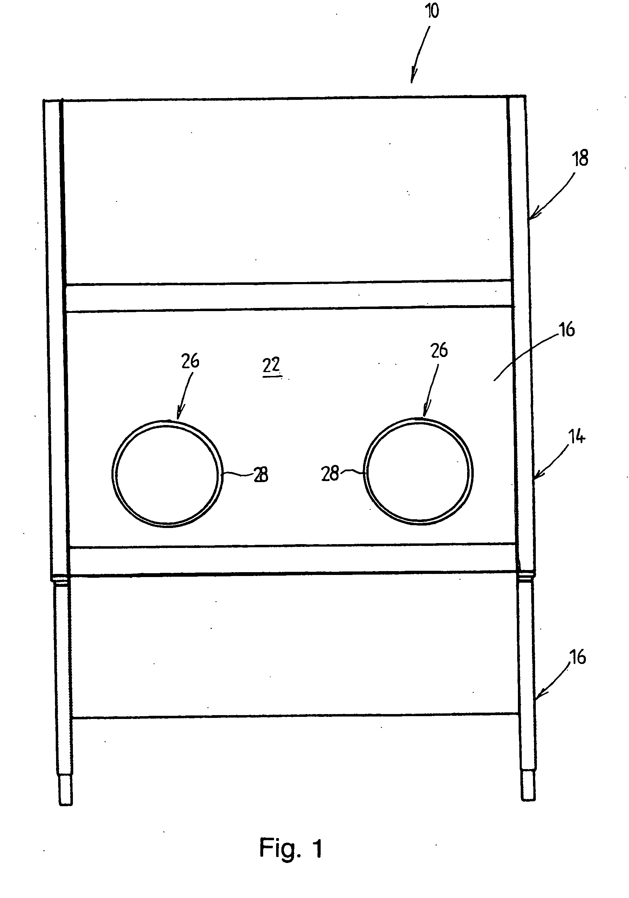

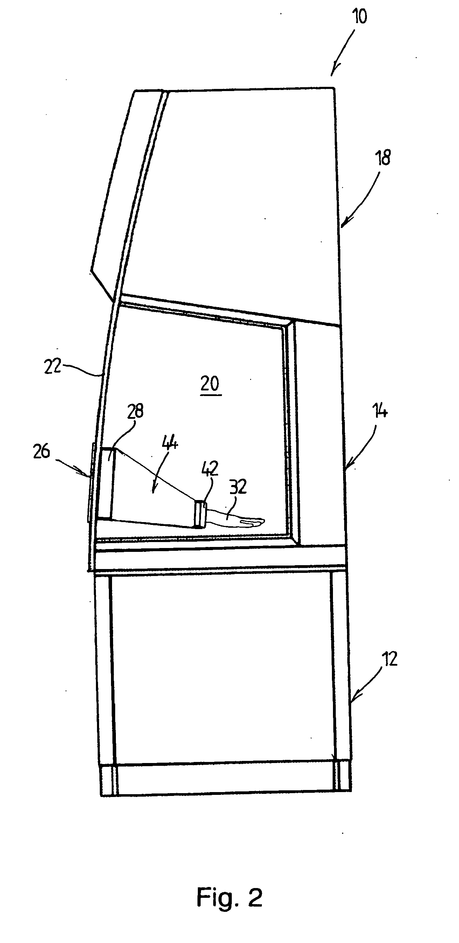

Wie am besten in Fig. 1 und 2 dargestellt, wird das ansonsten aus Stahlblech bestehende Gehäuse 16 an der Vorderseite und an den beiden Seiten von einer Frontscheibe 22 und zwei Seitenscheiben 24 aus Mehrscheiben-Sicherheitsglas begrenzt. Die Frontscheibe 22 weist zwei Handschuhdurchführungen 26 auf.

Jede der Handschuhdurchführungen 26 besteht aus einer kreisförmigen Öffnung im Sicherheitsglas der Frontscheibe 22, die einen Durchmesser von etwa 300 bis 320 mm besitzt, sowie einem in die Öffnung eingesetzten, lösbar mit dem Rand der Öffnung verbundenen Befestigungs- oder Schulterring 28.

An dem Schulterring 28 lässt sich ein in den Innenraum 20 ragender austauschbarer Ärmelteil 30 lösbar befestigen, an dessen distalem Ende sich wiederum ein austauschbarer Handschuh 32 lösbar befestigen lässt. Da die Ärmelteile 30 vor der Montage am Handschuhkasten oder Isolator 10 und vor der Bestückung mit einem Handschuh 32 an beiden Enden offen sind, werden sie auch als Ärmelstulpen bezeichnet.

Die schlauchartigen Ärmelteile 30 dienen jeweils zur Aufnahme eines Ober- und Unterarms einer Bedienungsperson, deren Hände zur Durchführung der bei der Medikamentenherstellung im Innenraum 20 notwendigen Tätigkeiten in den beiden an den Ärmelteilen 30 angebrachten Handschuhen 32 stecken. Jeder der beiden Ärmelteile 30 weist ein proximales Ende 31 auf, das sich lösbar an dem in die Öffnung eingesetzten Schulterring 28 von einer der Handschuhdurchführungen 26 befestigen lässt. Am distalen Ende 33 jedes Ärmelteils 30 ist ein starrer Befestigungs- oder Handschuhring 35 mit kleinerem Durchmesser angebracht, der zur lösbaren gasdichten Befestigung des Handschuhs 32 am Ärmelteil 30 dient. Zwischen dem proximalen und distalen Ende 33, 33 weist jeder Ärmelteil 30 einen flexiblen schlauchartigen Mittelteil 38 auf.

Der Mittelteil 38 besteht aus einem mehrschichtigen Material, das zum Beispiel eine reißfeste innere Gewebeschicht und eine äußere Schicht aus Polychloropren oder Nitril-Kautschuk umfasst, so dass der Ärmelteil gemäß DIN EN 374-3 (2003) für Zytostatika eine maximale Nutzungsdauer von mehr als 480 Minuten ohne Durchbruch aufweist.

Der Handschuh 32 ist lösbar mit dem Ärmelteil 30 verbunden, so dass er bei Bedarf ausgetauscht werden kann. Zur Gewährleistung einer gasdichten Verbindung zwischen dem Handschuh 32 und dem Ärmelteil 30 umfasst der Handschuh 32 am offenen proximalen Ende einen integrierten starren Montagering 42, auf den bei einem Wechsel des Handschuhs 32 der Montagering 42 des neuen Handschuhs 32 aufgesetzt werden kann, nachdem der alte Handschuh 32 ins Innere des Ärmelteils 30 gezogen worden ist. Anschließend kann der Montagering 42 des alten Handschuhs 32 mittels des Montagerings 42 des neuen Handschuhs 32 aus dem Handschuhring 35 des Ärmelteils 30 herausgedrückt werden und der umgestülpte alte Handschuh 32 samt Montagering 42 nach außen aus dem Ärmelteil 30 herausgezogen werden.

Ein solches Verfahren zum Austausch eines an einem Ärmelteil befestigten Handschuhs ist beispielsweise in der DE 2850946 C2 offenbart.

Zur Verlängerung der Nutzungsdauer der beiden Ärmelteile 30 wird vor jeder Herstellung von Zytostatika im Handschuhkasten oder Isolator 10 über jedem der Ärmelteile 30 eine abnehmbare Überziehmanschette 44 oder Überziehstulpe angebracht.

Die Überziehmanschette 44 besteht aus einem Zuschnitt aus einem biegeschlaffen reißfesten Substrat, das entlang einer Längsnaht (nicht dargestellt) zu einem an beiden Enden offenen konischen Schlauch vernäht ist. Das Substrat besteht aus einem reißfesten Polypropylenvlies und ist auf seiner Außenseite mit einer mikroporösen aber flüssigkeitsdichten Polyethylen-Beschichtung versehen, die flüssigkeitsabweisende Eigenschaften besitzt. Die Beschichtung kann ein Desinfektionsmittel oder eine andere Substanz zur Verzögerung einer mikrobiologischen Kontamination enthalten.

Die Länge der Überziehmanschette 44 ist etwas größer als die Länge des Ärmelteils 30, so dass die Überziehmanschette 44 nach ihrer Anbringung auf dem Ärmelteil 30 den gesamten Ärmelteil 30 bedeckt, wobei sie mit ihrem offenen proximalen Ende 46 das proximale Ende 31 des Ärmelteils 30 bedeckt und den Schulterring 28 überlappt und mit ihrem offenen distalen Ende 48 das distale Ende 33 des Ärmelteils 30 bedeckt und den Handschuhring 35 überlappt.

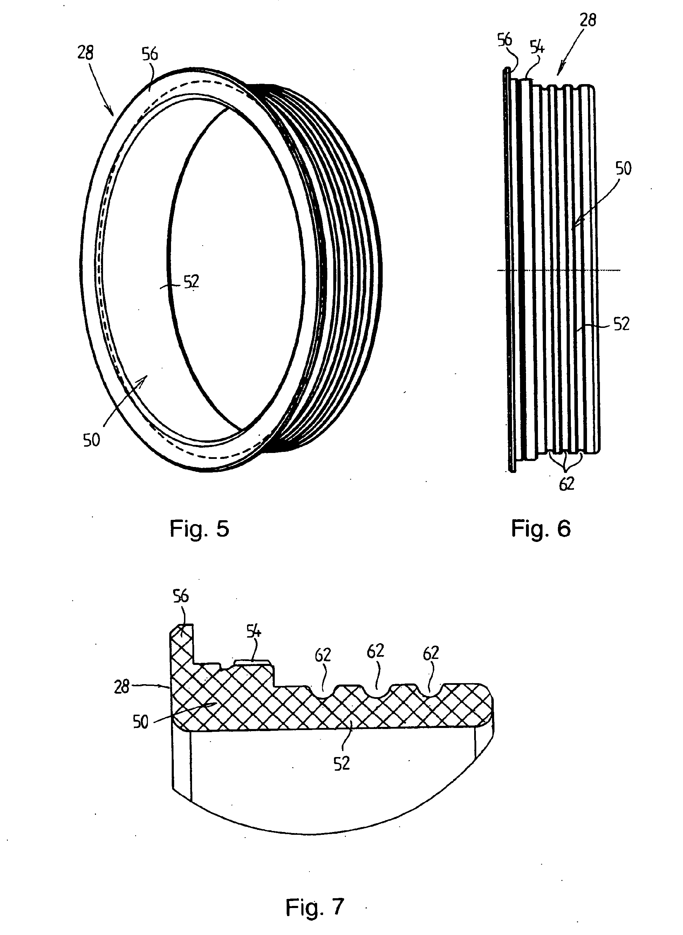

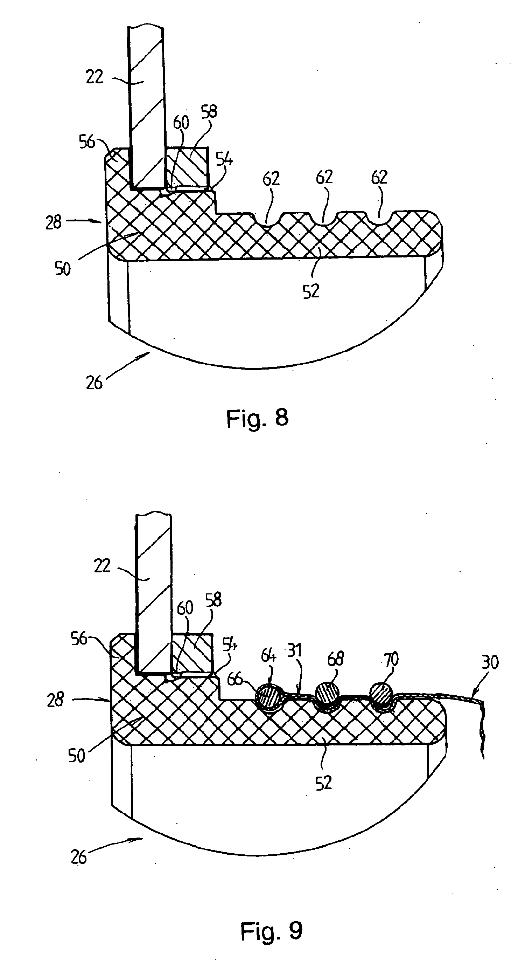

Wie am besten in den Figuren 5 bis 10 dargestellt, umfasst der aus Kunststoff hergestellte Schulterring 28 ein in die Öffnung im Sicherheitsglas 22 einsetzbares ringförmiges Einsetzelement 50 mit einem in den Innenraum 20 überstehenden kurzen Stutzen 52, einem auf dem Stutzen 52 ausgebildeten Außengewinde 54 und einer von außen her gegen das Sicherheitsglas 22 anliegenden Ringschulter 56, sowie eine ringförmige Kontermutter 58 mit einem komplementären Innengewinde 60, die von innen her auf das Außengewinde 54 geschraubt wird und die Ringschulter 56 des Schulterrings 28 gegen das Sicherheitsglas 22 zieht, wie in den Figuren 8 bis 11 dargestellt.

Am äußeren Umfang des Stutzens 52 sind hintereinander drei im Querschnitt halbkreisförmige Ringnuten 62 angeordnet, die zur Befestigung des proximalen Endes 31 des Ärmelteils 30 am Schulterring 28 dienen. Wie am besten in den Figuren 9 bis 11 dargestellt, ist ein Endabschnitt des proximalen Endes 31 des Ärmelteils 30 zu einer Schlaufe 64 umgelegt, in deren Innerem ein erster O-Ring 66 angeordnet ist. Zwei weitere lose O-Ringe 68, 70 dienen zur Sicherung des proximalen Endes 31 des Ärmelteils 30 auf dem Stutzen 52 des Schulterrings 28. Der Durchmesser der O-Ringe 66, 68, 70 ist etwas kleiner als der Durchmesser der Ringnuten 62, so dass sie bei ihrer Anbringung auf dem Stutzen 52 gedehnt werden und nach dem Loslassen unter Zugspannung stehen und in die Ringnuten 62 gepresst werden, wobei sie das proximale Ende 31 des Ärmelteils 30 dichtend gegen den äußeren Umfang des Stutzens 52 anpressen, wie am besten in Fig. 9 dargestellt.

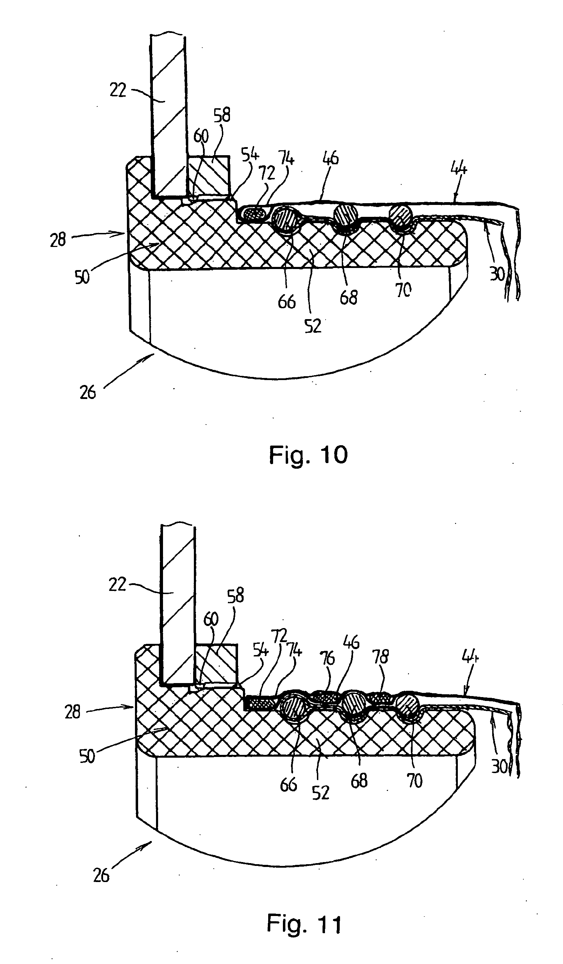

Wie in Fig. 10 dargestellt, weist die Überziehmanschette 44 am offenen proximalen Ende 46 einen Gummizug 72 auf, der in einen zu einer Schlaufe 74 geformten Endabschnitt des proximalen Endes 46 eingenäht ist. Bei der Anbringung des proximalen Endes 46 der Überziehmanschette 44 am Schulterring 28 wird der Gummizug 72 gedehnt und über alle drei O-Ringe 66, 68, 70 hinweg bewegt, bis er in einer Vertiefung zwischen dem ersten O-Ring 66 und einer umlaufenden Schulter 74 des Einsetzelements 50 angeordnet ist, wie in Fig. 10 dargestellt. Dadurch bedeckt die Überziehmanschette 44 das gesamte proximale Ende 31 des Ärmelteils 30 und liegt durch die Zugspannung des gedehnten Gummizugs 72 dichtend gegen eine proximale Umfangsfläche des Stutzens 52 an.

Zur Verbesserung der Dichtwirkung ist das offene proximale Ende 46 der in Fig. 11 dargestellten Überziehmanschette 44 mit insgesamt drei Gummizügen 72, 76, 78 versehen, deren Abstand dem Abstand der Ringnuten 62 bzw. der O-Ringe 66, 68, 70 entspricht, so dass die beiden zusätzlichen Gummizüge 76, 78 zwischen den O-Ringen 66 und 68 bzw. 68 und 70 zu liegen kommen. Die beiden zusätzlichen Gummizüge 76, 78 sind ebenfalls in Schlaufen des proximalen Endes 46 eingenäht.

Das offene distale Ende 48 der Überziehmanschette 44 wird in einer ähnlichen Weise auf dem Handschuhring 35 befestigt, so dass es hier nicht näher dargestellt werden braucht. Jedoch kann sich distale Ende 48 alternativ auch über den gesamten Handschuhring 35 hinweg bis zum Montagering 42 oder über diesen hinweg bis zum Handschuh 32 erstrecken. Auch hier wird eine gasdichte oder nahezu gasdichte Anlage des distalen Endes 48 der Überziehmanschette 44 gegen die äußere Umfangsfläche des Handschuhrings 35, des Montagerings 42 bzw. des Handschuhs 32 durch einen oder mehrere, in das distale Ende 48 integrierte Gummizüge gewährleistet, deren Innendurchmesser in ungedehntem Zustand etwas kleiner als die Außendurchmesser der äußeren Umfangsflächen des Handschuhrings 35, des Montagerings 42 bzw. des Handschuhs 32 sind.

Da der Schulterring 28 einen größeren Außendurchmesser als der Handschuhring 36 aufweist, verjüngt sich die Überziehmanschette 44 von ihrem gegen den Schulterring 28 anliegenden proximalen Ende 46 bis zu ihrem gegen den Handschurring 36 anliegenden distalen Ende 48, was die Anbringung der Überziehmanschette erleichtert.

## Patentansprüche

1. Vorrichtung zur Verlängerung der Nutzungsdauer eines zwischen einer Handschuhdurchführung eines Handschuhkastens oder Isolators und einem Handschuh angeordneten Ärmelteils, das gasdicht mit der Handschuhdurchführung und dem Handschuh verbunden ist, **gekennzeichnet durch** eine flexible Überziehmanschette (44) mit zwei entgegengesetzten offenen Enden (46, 48) und einer Länge, die mindestens der Länge des Ärmelteils (30) entspricht, sowie mit Befestigungsmitteln (72, 76, 78) an den Enden der Überziehmanschette (44), die nach dem Hindurchführen des Ärmelteils (30) **durch** die Überziehmanschette (44) das proximale offene Ende (46) der Überziehmanschette (44) gegen ein proximales Ende des Ärmelteils (30) oder gegen einen Schulterring (28) der Handschuhdurchführung (26) anliegend festhalten und das distale offene Ende (48) der Überziehmanschette (44) gegen ein distales Ende des Ärmelteils (30), gegen einen Handschuh- oder Montagering (35, 42) zwischen dem Ärmelteil (30) und dem Handschuh (32) oder gegen den Handschuh (32) anliegend festhalten.

2. Vorrichtung nach Anspruch 1, **dadurch gekennzeichnet, dass** sich die Überziehmanschette (44) zwischen ihren beiden entgegengesetzten Enden (46, 48) verjüngt.

3. Vorrichtung nach Anspruch 1 oder 2, **dadurch gekennzeichnet, dass** die Befestigungsmittel (72, 76, 78) elastisch dehnbar sind.

4. Vorrichtung nach Anspruch 3, **dadurch gekennzeichnet, dass** die Befestigungsmittel Gummizüge (72, 76, 78) sind.

5. Vorrichtung nach einem der vorangehenden Ansprüche, **dadurch gekennzeichnet, dass** die Überziehmanschette (44) mindestens teilweise aus einem Material besteht, das die Anforderung der DIN EN 374 an persönliche Schutzausrüstungen der Kategorie III erfüllt.

6. Vorrichtung nach einem der vorangehenden Ansprüche, **dadurch gekennzeichnet, dass** die Überziehmanschette (44) aus einem beschichteten Vliesmaterial besteht.

7. Vorrichtung nach einem der vorangehenden Ansprüche, **dadurch gekennzeichnet, dass** die Überziehmanschette (44) an ihrer Außenseite mit einer flüssigkeitsabweisenden Beschichtung versehen ist.

8. Vorrichtung nach einem der vorangehenden Ansprüche, **dadurch gekennzeichnet, dass** die Überziehmanschette (44) an ihrer Außenseite eine Beschichtung zur Verzögerung einer mikrobiologischen Kontamination trägt.

9. Vorrichtung nach einem der vorangehenden Ansprüche, **dadurch gekennzeichnet, dass** die Überziehmanschette (44) aus einem reißfesten Material besteht.

10. Vorrichtung nach einem der vorangehenden Ansprüche, **dadurch gekennzeichnet, dass** die Überziehmanschette (44) aus einem mehrschichtigen Material besteht.

11. Handschuhkasten oder Isolator, mit einem gasdichten Gehäuse, mindestens zwei Handschuhdurchführungen, austauschbaren Ärmelteilen für jede Handschuhdurchführung und austauschbaren Handschuhen für jeden Ärmelteil, **gekennzeichnet**
**durch** eine Vorrichtung nach einem der Ansprüche 1 bis 10, die über jeden Ärmelteil (30) gezogen ist.

12. Verfahren zur Verlängerung der Nutzungsdauer eines Ärmelteils, das zwischen einer Handschuhdurchführung eines gasdichten Gehäuses eines Handschuhkastens oder Isolators und einem austauschbaren Handschuh angeordnet und gasdicht mit der Handschuhdurchführung und dem Handschuh verbunden ist, **dadurch gekennzeichnet, dass** eine schlauchartige Überziehmanschette (44) mit zwei entgegengesetzten offenen Enden (46, 48) innerhalb des gasdichten Gehäuses (16) über den Ärmelteil (30) gezogen wird, wobei das proximale offene Ende (46) der Überziehmanschette (44) gegen ein proximales Ende des Ärmelteils (30) oder gegen einen Schulterring (28) der Handschuhdurchführung (26) anliegend befestigt wird und das distale offene Ende (48) der Überziehmanschette (44) gegen ein distales Ende des Ärmelteils (30), gegen einen Handschuh- oder Montagering (35, 42) zwischen dem Ärmelteil (30) und dem Handschuh (32) oder gegen den Handschuh (32) anliegend befestigt wird.

## Claims

1. Device for extending the service life of a sleeve part which is disposed between a glove duct of a glove box or an isolator and a glove and which is connected in a gas-tight manner to the glove duct and to the glove, **characterized by** a flexible pullover cuff (44) having two opposite open ends (46, 48) and a length which corresponds to at least the length of the sleeve part (30), and having fastening means (72, 76, 78) on the ends of the pullover cuff (44) which, after passing the sleeve part (30) through the pullover cuff (44), firmly hold in a fitting manner the proximal open end (46) of the pullover cuff (44) against a proximal end of the sleeve part (30) or against a shoulder ring (28) of the glove duct (26), and firmly hold in a fitting manner the distal open end (48) of the pullover cuff (44) against a distal end of the sleeve part (30), against a glove ring or mounting ring (35, 42) between the sleeve part (30) and the glove (32), or against the glove (32).

2. Device according to Claim 1, **characterized in that** the pullover cuff (44) tapers off between its two opposite ends (46, 48).

3. Device according to Claim 1 or 2, **characterized in that** the fastening means (72, 76, 78) are elastically expandable.

4. Device according to Claim 3, **characterized in that** the fastening means are rubber bands (72, 76, 78).

5. Device according to one of the preceding claims, **characterized in that** the pullover cuff (44) at least in part is composed of a material which meets the requirements of DIN EN 374 for personal protective wear of Category III.

6. Device according to one of the preceding claims, **characterized in that** the pullover cuff (44) is composed of a coated non-woven material.

7. Device according to one of the preceding claims, **characterized in that** the pullover cuff (44) on its outer side is provided with a liquid-repellent coating.

8. Device according to one of the preceding claims, **characterized in that** the pullover cuff (44) on its outer side carries a coating for delaying a microbiological contamination.

9. Device according to one of the preceding claims, **characterized in that** the pullover cuff (44) is composed of a tear-resistant material.

10. Device according to one of the preceding claims, **characterized in that** the pullover cuff (44) is composed of a multi-layered material.

11. Glove box or isolator, having a gas-tight housing, at least two glove ducts, replaceable sleeve parts for each glove duct, and replaceable gloves for each sleeve part, **characterized by** a device according to one of Claims 1 to 10, which is pulled over each sleeve part (30).

12. Method for extending the service life of a sleeve part which is disposed between a glove duct of a gas-tight housing of a glove box or an isolator and a replaceable glove and which is connected in a gas-tight manner to the glove duct and to the glove, **characterized in that** within the gas-tight housing (16) a tubular pullover cuff (44) having two opposite open ends (46, 48) is pulled over the sleeve part (30), wherein the proximal open end (46) of the pullover cuff (44) is fastened so as to fit on a proximal end of the sleeve part (30) or against a shoulder ring (28) of the glove duct (26), and the distal open end (48) of the pullover cuff (44) is fastened so as to fit on a distal end of the sleeve part (30), on a glove ring or mounting ring (35, 42) between the sleeve part (30) and the glove (32), or on the glove (32).

## Revendications

1. Dispositif pour prolonger la durée de vie utile d'une partie de manchon disposée entre un passage de gant d'une boîte à gants ou d'un isolateur et un gant, laquelle partie de manchon est connectée de manière étanche aux gaz au passage de gant et au gant, **caractérisé par** une manchette de recouvrement flexible (44) avec deux extrémités ouvertes opposées (46, 48) et une longueur qui correspond au moins à la longueur de la partie de manchon (30), et comprenant des moyens de fixation (72, 76, 78) aux extrémités de la manchette de recouvrement (44), lesquels, après le passage de la partie de manchon (30) à travers la manchette de recouvrement (44), fixent par application l'extrémité ouverte proximale (46) de la manchette de recouvrement (44) contre une extrémité proximale de la partie de manchon (30) ou contre une bague d'épaulement (28) du passage de gant (26) et fixent par application l'extrémité ouverte distale (48) de la manchette de recouvrement (44) contre une extrémité distale de la partie de manchon (30), contre une bague de gant ou une bague de montage (35, 42) entre la partie de manchon (30) et le gant (32) ou contre le gant (32).

2. Dispositif selon la revendication 1, **caractérisé en ce que** la manchette de recouvrement (44) se rétrécit entre ses deux extrémités opposées (46, 48).

3. Dispositif selon la revendication 1 ou 2, **caractérisé en ce que** les moyens de fixation (72, 76, 78) peuvent être étirés élastiquement.

4. Dispositif selon la revendication 3, **caractérisé en ce que** les moyens de fixation sont des bandes élastiques (72, 76, 78).

5. Dispositif selon l'une quelconque des revendications précédentes, **caractérisé en ce que** la manchette de recouvrement (44) se compose au moins en partie d'un matériau qui satisfait aux exigences de la norme DIN EN 374 relative aux équipements de protection individuelle de catégorie III.

6. Dispositif selon l'une quelconque des revendications précédentes, **caractérisé en ce que** la manchette de recouvrement (44) se compose d'un matériau non-tissé revêtu.

7. Dispositif selon l'une quelconque des revendications précédentes, **caractérisé en ce que** la manchette de recouvrement (44) est munie sur son côté extérieur d'un revêtement étanche aux liquides.

8. Dispositif selon l'une quelconque des revendications précédentes, **caractérisé en ce que** la manchette de recouvrement (44) porte sur son côté extérieur un revêtement pour retarder une contamination microbiologique.

9. Dispositif selon l'une quelconque des revendications précédentes, **caractérisé en ce que** la manchette de recouvrement (44) se compose d'un matériau résistant aux déchirures.

10. Dispositif selon l'une quelconque des revendications précédentes, **caractérisé en ce que** la manchette de recouvrement (44) se compose d'un matériau multicouche.

11. Boîte à gants ou isolateur, comprenant un boîtier étanche aux gaz, au moins deux passages de gant, des parties de manchon remplaçables pour chaque passage de gant et des gants remplaçables pour chaque partie de manchon, caractérisé(e) par un dispositif selon l'une quelconque des revendications 1 à 10, qui est tiré par-dessus chaque partie de manchon (30).

12. Procédé pour prolonger la durée de vie utile d'un boîtier d'une partie de manchon qui est disposée entre un passage de gant d'un boîtier étanche aux gaz d'une boîte à gants ou d'un isolateur et un gant remplaçable, et qui est connectée de manière étanche aux gaz au passage de gant et au gant, **caractérisé en ce qu'**une manchette de recouvrement de type tuyau souple (44) est tirée avec deux extrémités ouvertes opposées (46, 48) à l'intérieur du boîtier étanche aux gaz (16) par-dessus la partie de manchon (30), l'extrémité ouverte proximale (46) de la manchette de recouvrement (44) étant fixée par application contre une extrémité proximale de la partie de manchon (30) ou contre une bague d'épaulement (28) du passage de gant (26) et l'extrémité ouverte distale (48) de la manchette de recouvrement (44) étant fixée par application contre une extrémité distale de la partie de manchon (30), contre une bague de gant ou une bague de montage (35, 42) entre la partie de manchon (30) et le gant (32) ou contre le gant (32).
